Europäisches Patentamt

European Patent Office

Office européen des brevets

(19)

(11) Veröffentlichungsnummer: **0 178 507**
**B1**

# EUROPÄISCHE PATENTSCHRIFT

(12)

(45) Veröffentlichungstag der Patentschrift:
**11.05.88**

(21) Anmeldenummer: **85112166.5**

(22) Anmeldetag: **25.09.85**

(51) Int. Cl.⁴: **G 01 N 31/00, G 01 N 25/48**

(54) **Verfahren und Vorrichtung zur Bestimmung und Überwachung von Wasserstoffperoxid-Konzentrationen in flüssigen Reaktionsmedien.**

(30) Priorität: **13.10.84 DE 3437624**

(43) Veröffentlichungstag der Anmeldung:
**23.04.86 Patentblatt 86/17**

(45) Bekanntmachung des Hinweises auf die Patenterteilung:
**11.05.88 Patentblatt 88/19**

(84) Benannte Vertragsstaaten:
**AT BE CH DE FR GB IT LI LU NL SE**

(56) Entgegenhaltungen:
**US - A - 4 469 664**

**HENGSTENBERG-STURM-WINKLER, "Messen und Regeln in der Chemischen Technik", 2. Auflage, 1964, SPRINGER-VERLAG Berlin/Göttingen/Heidelberg, Seite 587**
**W. LEITHE, "Die Analyse der Luft und ihrer Verunreinigung", 2. Auflage, 1974, WISSENSCHAFLICHE VERLAGSGESELLSCHAFT MBH, Stuttgart, Seite 168**

(73) Patentinhaber: **Degussa Aktiengesellschaft, Weissfrauenstrasse 9, D-6000 Frankfurt am Main 1 (DE)**

(72) Erfinder: **Kürzinger, Karl, Dr. Ing., Lilienstrasse 14, D-6450 Hanau 8 (DE)**
Erfinder: **Kreuzer, Thomas, Dr. Ing., 38 Sandy Hill Road, Chatham, NJ 07928 (US)**
Erfinder: **Schwab, Heinrich, Dr. Dipl.-Chem., Heinrich-Zinss-Weg 4, D-6000 Frankfurt 60 (DE)**

## Beschreibung

Die Erfindung betrifft ein Verfahren zur Bestimmung und Überwachung von Wasserstoffperoxidkonzentrationen in flüssigen Reaktionsmedien durch Umsetzung des Wasserstoffperoxids in einem Teilstrom des Reaktionsmediums mit einem Stoff, der mit Wasserstoffperoxid vollständig abreagiert, und Messung der damit verbundenen physikalischen und/oder chemischen Effekte, und eine Vorrichtung zur Durchführung dieses Verfahrens.

Bei vielen kontinuierlichen und auch diskontinuierlichen chemischen Verfahren, die mit Wasserstoffperoxid arbeiten, ist es notwendig, die Konzentration des Wasserstoffperoxids messend zu überwachen und bei Bedarf zu regulieren. Dies gilt insbesondere auch für moderne Verfahren der Rauchgaswäsche, bei denen Schwefeldioxid und gegebenenfalls Stickoxide mit Hilfe von wasserstoffperoxidhaltigen Lösungen aus den Rauchgasen entfernt werden.

Es ist bekannt, kleinere Wasserstoffperoxidkonzentrationen durch Potentialmessungen mit Hilfe von Elektrodenpaaren zu bestimmen. Diese Methode versagt allerdings bei Wasserstoffperoxidkonzentrationen grösser als $10^{-2}$ mol/l. Diese Grenze kann im Laufe der Zeit durch Veränderungen des Elektrodenmaterials (meist Platin/Kalomel) noch weiter nach unten verschoben werden.

Es ist weiterhin bekannt, einen bestimmten Volumenstrom des zu messenden wasserstoffperoxidhaltigen Reaktionsmediums mit einem bestimmten Volumenstrom einer Kaliumpermanganatlösung in einer Reaktionskammer zusammenzuführen. Die Volumenströme werden dabei so aufeinander abgestimmt, dass das Permanganat gerade mit dem Wasserstoffperoxid abreagiert. Das Potential der abreagierten Lösung wird dann mit einer Elektrode erfasst. Je anchdem das Potential oberhalb oder unterhalb eines bestimmten Wertes liegt, wird dem Reaktionsmedium über eine Steuereinrichtung weniger oder mehr Wasserstoffperoxid zudosiert. Dieses Verfahren hat den Nachteil, dass die Permanganatlösung nicht stabil ist und oxidierbare Begleitstoffe im Reaktionsmedium zu falschen Ergebnissen führen. Durch den Chemikalienverbrauch entstehen relativ hohe Kosten, verbunden mit einer zusätzlichen Umweltbelastung bei der Beseitigung der abreagierten Wasserstoffperoxid-Mangan-Lösung.

Es war daher Aufgabe der vorliegenden Erfindung, ein Verfahren zur Bestimmung und Überwachung von Wasserstoffperoxidkonzentrationen in flüssigen Reaktionsmedien zu entwickeln, durch Umsetzung des Wasserstoffperoxids in einem Teilstrom des Reaktionsmediums mit einem Stoff, der mit Wasserstoffperoxid vollständig abreagiert, und Messung der damit verbundenen physikalischen und/oder chemischen Effekte, wobei dieses Verfahren auch für höhere Wasserstoffperoxidkonzentrationen geeignet, nicht umweltbelastend und kontinuierlich auch bei verunreinigten Reaktionsmedien durchführbar sein sollte. Ausserdem sollte eine entsprechende Vorrichtung entwickelt werden.

Diese Aufgabe wurde erfindungsgemäss dadurch gelöst, dass als reagierender Stoff ein Stoff verwendet wird, der sich mit Wasserstoffperoxid in einer exothermen Reaktion umsetzt, dass der Teilstrom des Reaktionsmediums und ein Strom des reagierenden Stoffes in einer thermisch isolierten Messzelle zusammengebracht werden, und dass der aus der Reaktionswärme herrührende Temperaturanstieg des Gemisches gemessen wird, wobei der reagierende Stoff im Überschuss gegenüber dem Wasserstoffperoxid vorliegen muss.

Vorzugsweise liegt das äquivalente Verhältnis Wasserstoffperoxid zu reagierendem Stoff bei 1:1,3 bis 1,8. Vorteilhaft in bezug auf die Messgenauigkeit des Verfahrens ist es auch, wenn der Teilstrom des Reaktionsmediums und der Strom des reagierenden Stoffes in einem vorgegebenen Mengenverhältnis konstant gehalten werden und beide Ströme etwa die gleiche Temperatur aufweisen.

Als reagierender Stoff hat sich besonders Schwefeldioxid bewähr, vor allem dann, wenn als Reaktionsmedium ein Schwefelsäure-Wasserstoffperoxidgemisch zur Rauchgaswäsche überwacht werden soll. Das Schwefeldioxid kann dabei gasförmig der Messzelle zugeführt werden, vorteilhafterweise setzt man es aber einem weiteren Teilstrom des Reaktionsmediums zu, wobei dieser Teilstrom nach Abreaktion des darin enthaltenen Wasserstoffperoxids als gesättigte Schwefeloxidlösung der Messzelle zugeführt wird.

Zur Überwachung des Wasserstoffperoxidkonzentration wird daher ein Volumenstrom des Reaktionsmedium und ein mit Schwefeldioxid gesättigter Volumenstrom der gleichen Lösung nach Abreaktion des Wasserstoffperoxids in diesem Teilstrom in einem bestimmten Mengenverhältnis am Eingang der Messzelle zusammengeführt, wobei zuvor die Temperatur des Reaktionsmediumsteilstroms oder die Temperatur beider Teilströme gemessen wird. Beim Durchlaufen der sich mischenden Teilströme durch die Messzelle kommt es aufgrund der exothermen Reaktion zwischen Wasserstoffperoxid und Schwefeldioxid zu einer Temperaturerhöhung, die am Ausgang der Messzelle bestimmt wird. Die Temperaturdifferenz zwischen Messzelleneingang und Messzellenausgang ist ein Mass für die Wärmeentwicklung und damit ein Mass für die Wasserstoffperoxidkonzentration, die direkt proportional zur Temperaturerhöhung ist.

In die gemessene Temperaturerhöhung , geht ausser der Reaktionswärme eigentlich aus noch die Verdünnungswärme und die Lösungswärme des reagierenden Stoffes, hier $SO_2$, ein. Die Verdünnungswärme kann hierbei vernachlässigt werden, da beide Teilströme aus dem gleichen Lösungsmittel bestehen, beispielsweise aus 20%iger Schwefelsäure. Auch die Lösungswärme des Schwefeldioxids in dem betreffenden Lösungsmittel wird in diesem speziellen Fall nicht von der gemessenen Temperaturdifferenz erfasst, sofern das $SO_2$ vor Eintritt in die Messzelle in einem separaten Behälter gelöst wird und die Temperaturen der beiden Teilströme möglichst auf den gleichen Wert gebracht werden.

Wird das Schwefeldioxid nicht in Lösung, sondern gasförmig in die Messzelle eingeleitet, so geht in die Temperaturerhöhung auch die Lösungswärme des Schwefeldioxids im wasserstoffperoxidhaltigen Reaktionsmedium ein. In diesem Fall muss der Schwefeldioxidgasstrom möglichst konstant gehalten werden, so dass diese Wärmetönung ebenfalls eine konstante Grösse ist und die Proportionalität zwischen gemessener Temperaturdifferenz und Wasserstoffperoxidkonzentration erhalten bleibt. Auch hier muss das $SO_2$ mengenmässig gegenüber dem Wasserstoffperoxid im Überschuss vorliegen und der Wasserstoffperoxidkonzentration angepasst sein.

Ausser Schwefeldioxid lassen sich beispielsweise auch noch Schwefelwasserstoff, Cynaid-, Hypochlorit-, Sulfit-, Thiosulfat-, Sulfid- und Eisen-EDTA-Lösungen als exotherm mit Wasserstoffperoxid abreagierende Stoffe einsetzen.

Diese Verfahren zur Bestimmung und Überwachung von Wasserstoffperoxidkonzentrationen in flüssigen Reaktionsmedien hat gegenüber den bekannten Verfahren den Vorteil, dass es bei allen Wasserstoffperoxidkonzentrationen anwendbar ist, auch bei stark verunreinigten Reaktionsmedien eine kontinuierliche und vollautomatische Konzentrationsmessung erlaubt und kein Ansetzen und umständliches Beseitigen von Reaktionslösungen erfordert.

Diese Verfahren zur Bestimmung und Überwachung von Wasserstoffperoxidkonzentrationen in flüssigen Reaktionsmedien werden vorzugsweise in Vorrichtungen vorgenommen, die aus einem Behälter für das Reaktionsmedium, Leitungen, Dosiereinrichtungen, Fördermitteln und einer Messzelle bestehen, wobei die Messzelle mit einer thermischen Isolation versehen ist, an einem Ende getrennt einen Zulauf für eine Teilstromleitung des Reaktionsmediums und einen Zulauf für den reagierenden Stoff aufweist, am anderen Ende einen Ablauf besitzt und an einem Zulauf oder beiden Zuläufen und am Ablauf Temperaturfühler zur Messung der Eingangs- und Ausgangstemperatur der Flüssigkeiten angebracht sind.

Bei Einbringung von gelöstem Schwefeldioxid in einem weiteren Teilstrom wird vorteilhafterweise zwischen dem Behälter für das Reaktionsmedium und der Messzelle eine weitere Teilstromleitung angeordnet, in die ein Sättiger für die Schwefeldioxidzugabe eingebaut ist. Besonders bewährt hat sich die Ausbildung der Teilstromleitung für das Reaktionsmedium und die Teilstromleitung für den reagierenden Stoff zwischen Sättiger und Messzelle als Doppelleitung, wodurch eine weitere Temperaturangleichung der beiden Teilströme erzielt wird.

Die Abbildungen I bis III zeigen schematisch beispielhafte Ausführungsformen der erfindungsgemässen Vorrichtung, wobei Abbildung I eine Vorrichtung mit Zugabe von gasförmigen reagierenden Stoffen, Abbildung II eine Vorrichtung mit zwei Teilströmen und Zugabe von gelöstem Schwefeldioxid und Abbildung III die Messzelle mit einer Doppelrohrleitung wiedergibt.

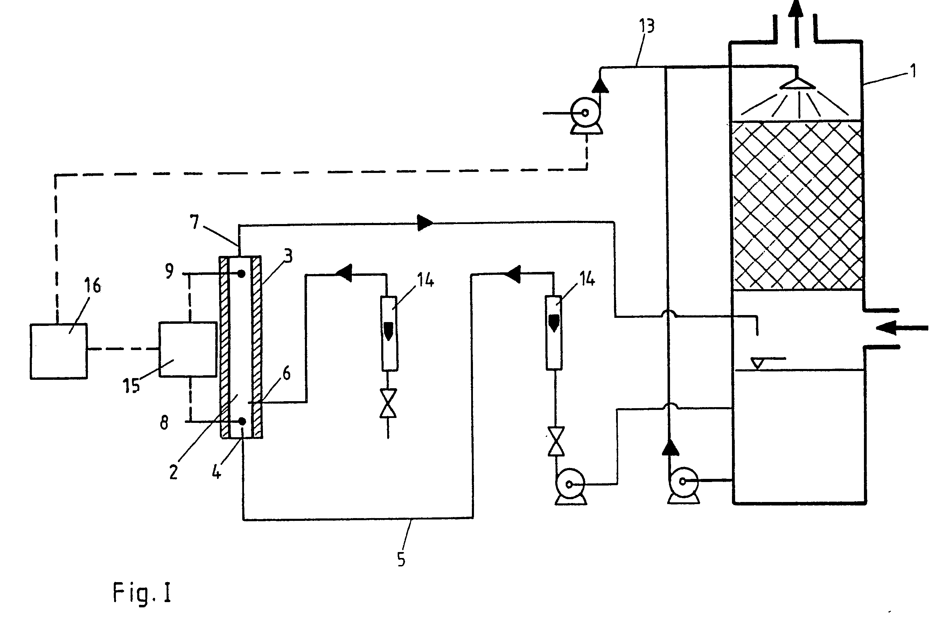

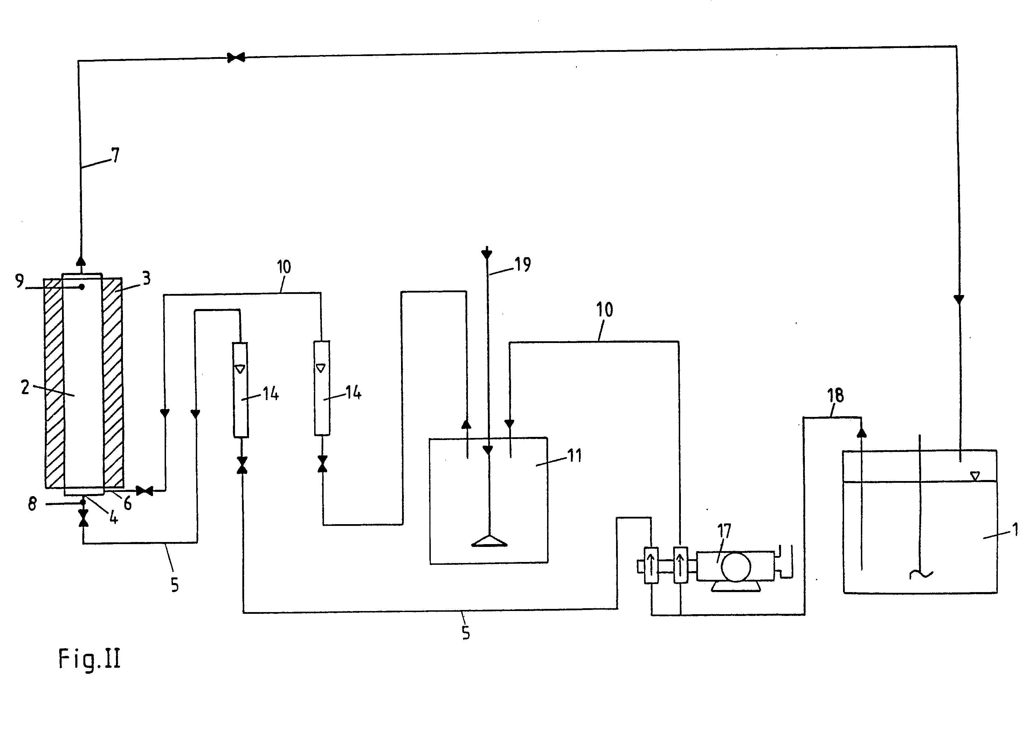

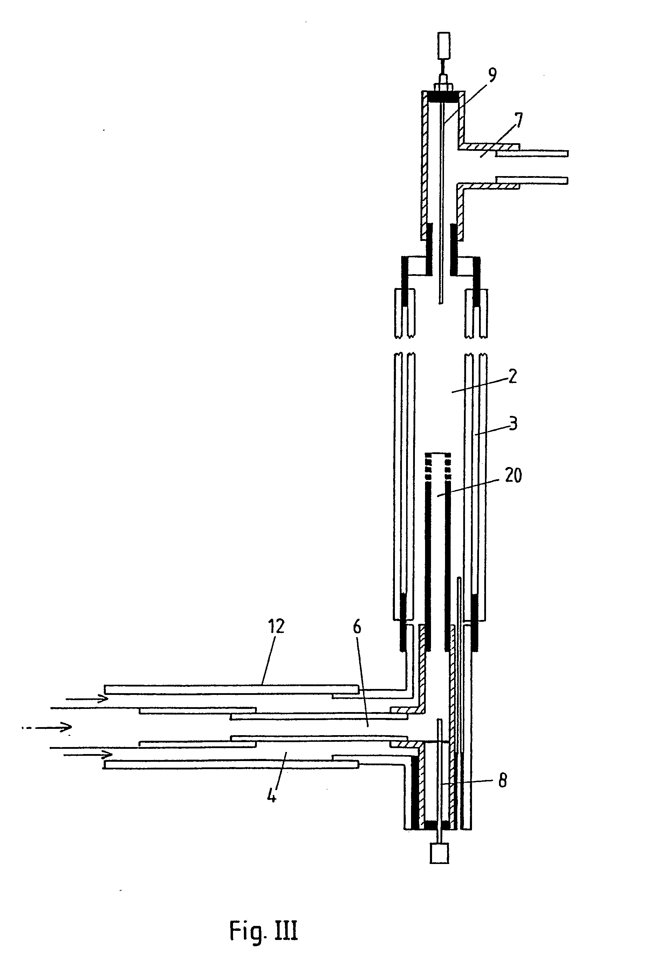

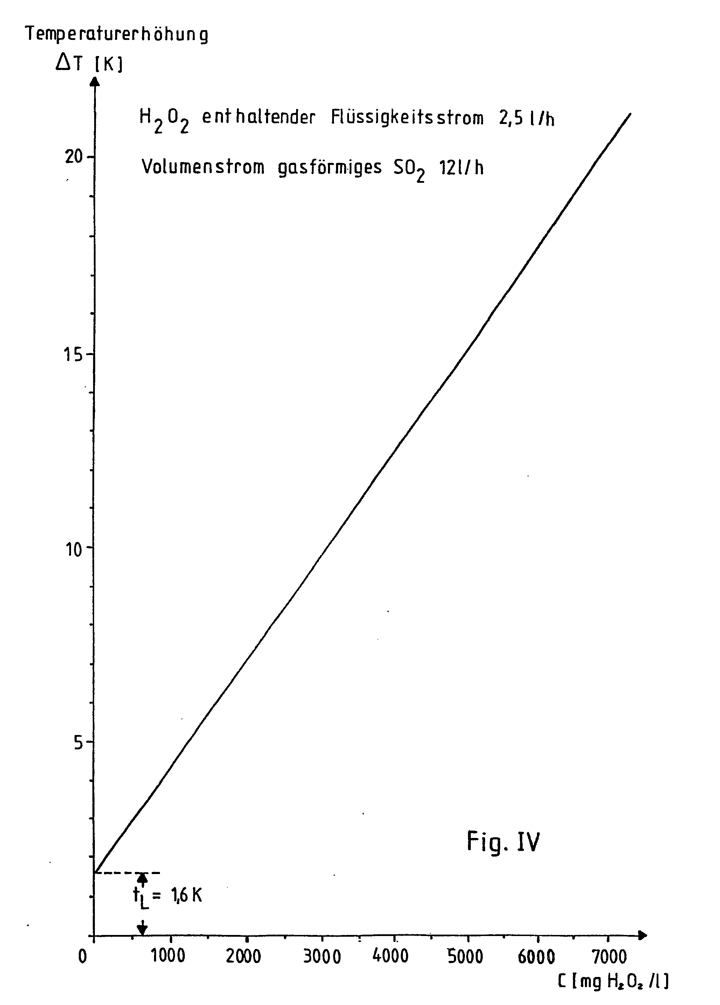

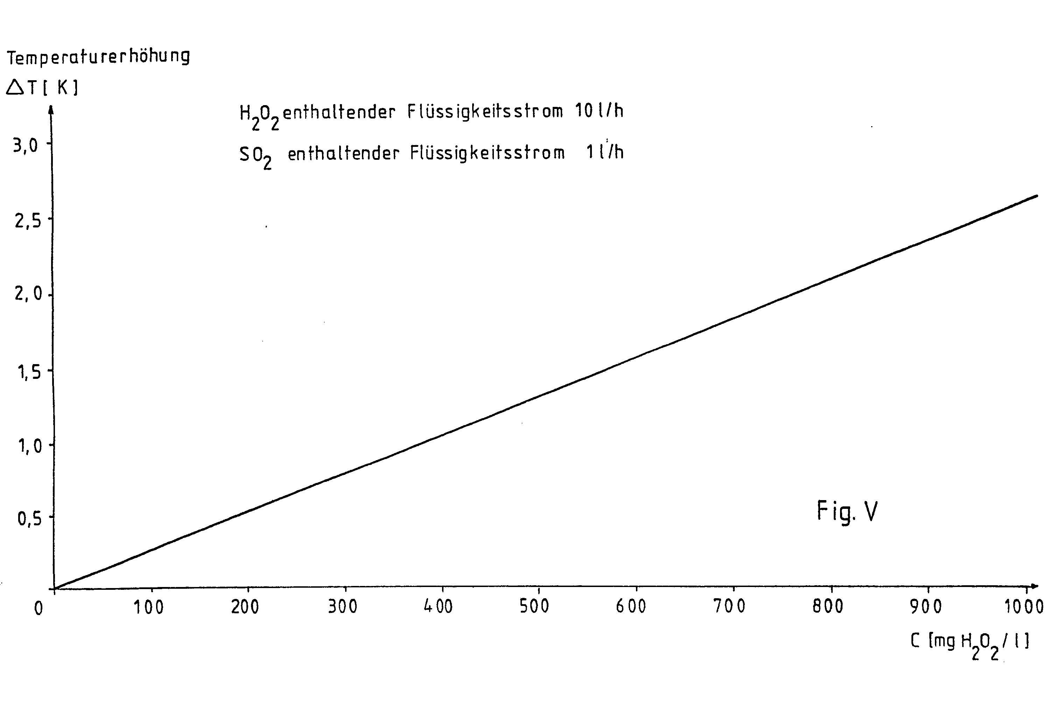

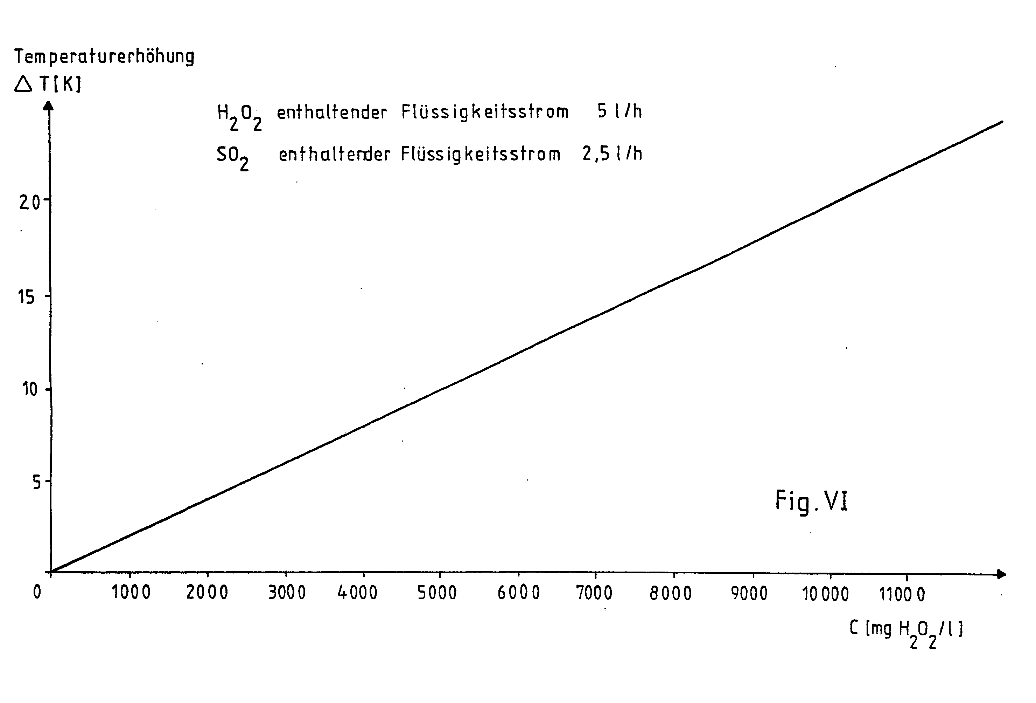

Die Abbildung I zeigt einen Behälter (1) der das Reaktionsmedium enthält, beispielsweise ein Schwefelsäure-Wasserstoffperoxidgemisch zur Rauchgaswäsche, das im Kreislauf gefahren wird und dessen Wasserstoffperoxidgehalt über die Leitung (13) kontinuierlich ergänzt werden muss. Zur Bestimmung der Wasserstoffperoxidkonzentration im Reaktionsmedium wird ein Teilstrom des Reaktionsmediums über die Teilstromleitung (5) der Messzelle (2), die mit einer thermischen Isolierung (3) versehen ist, über einen Zulauf (4) zugeführt und dessen Temperatur mit einem Temperaturfühler (8) gemessen. Über einen weiteren Zulauf (6) wird der Messzelle (2) ein mit Wasserstoffperoxid exotherm reagierender Stoff, beispielsweise Schwefeldioxid, zugeführt. Nach der Vermischung und Abreaktion wird mit einem weiteren Temperaturfühler (9) die von der Reaktionswärme herrührende Temperaturerhöhung gemessen und die Flüssigkeit über den Ablauf (7) wieder dem Behälter (1) zugeleitet. Mittels Dosiereinrichtungen (14) werden die Teilströme von Reaktionsmedium und reagierendem Stoff konstant gehalten. Die gemessenen Temperaturwerte werden in einem Rechner (15) mit vorgegebenen Eichwerten verglichen, der dann über einen Regler (16) die Wasserstoffperoxidzugabe über die Leitung (13) in den Behälter (1) regelt und konstant hält.

Abbildung II zeigt eine Vorrichtung, bei der dem Behälter (1) über eine Leitung (18) ein Teilström entnommen und dieser über eine Teilungseinrichtung (17) in zwei Teilströme zerlegt wird, wobei der eine Teilstrom über die Teilstromleitung (5) der Messzelle (2) zugeführt und der zweite Teilstrom über die Teilstromleitung (10) in einen Sättiger (11) eingeleitet wird. Hier wird die $H_2O_2$-haltige Lösung mit Schwefeldioxid über die Leitung (19) in Kontakt gebracht. Es reagiert hierbei nicht nur das Wasserstoffperoxid mit Schwefeldioxid zu Schwefelsäure, sondern die Lösung wird auch mit Schwefeldioxid gesättigt. Dieses Schwefeldioxid dient dann in der Messzelle (2) als Reaktionspartner für das Wasserstoffperoxid des anderen Teilstroms.

Da im Sättiger (11) bei der Umsetzung des Wasserstoffperoxids mit dem Schwefeldioxid durch die Reaktionswärme und beim Lösen des Schwefeldioxids in der Lösung durch die Lösungswärme eine Temperaturerhöhung auftritt, wird vorteilhafterweise die Temperatur der beiden Teilströme auf einen gleichen Wert gebracht, um mit einer einzigen Temperaturmessung im Zulauf der Messzelle (2) auszukommen. Das kann durch Kühlschlangen im Sättiger (11) erfolgen, durch die das $H_2O_2$-haltige Reaktionsmedium geleitet wird. Ausserdem können ab dem Sättiger (11) beide Teilströme in einer Doppelleitung (12) der Messzelle (2) zugeführt werden (Abb. III) wodurch eine weitere Temperaturangleichung erfolgt. Gegebenenfalls kann auch die Temperatur beider Teilströme gemessen und ein entsprechender Mittelwert gebildet werden. Einbauten (20) in der Messzelle (2) sorgen für eine Verteilung und innige Vermischung der beiden Teilströme. Die Dosiereinrichtungen (14) sorgen dafür, dass die beiden Teilströme in einem eingestellten Mengenverhältnis konstant bleiben, da bei einer Massenschwankung der Teilströme ein Temperaturfehler entstehen würde, weil die resultierende Temperaturerhöhung auch abhängig ist vom Verhältnis der Massenströme.

Folgende Beispiele sollen das erfindungsgemässe Verfahren näher erläutern:

1. Einer 25%igen wässrigen Schwefelsäurelösung mit wechselnden Mengen Wasserstoffperoxid wird in einer Vorrichtung gemäss Abbildung I gasförmiges Schwefeldioxid zugesetzt. Dabei beträgt der Teilstrom der wasserstoffperoxidhaltigen Schwefelsäure, der der Messzelle zugeführt wird 2,5 l pro Stunde, der Volumenstrom des gasförmigen Schwefeldioxids 12 l pro Stunde unter Normalbedindungen. Mit den beiden Temperaturfühlern in der Messzelle wird die Temperaturerhöhung infolge der exothermen Abreaktion gemessen.

Tabelle I und Abbildung IV zeigen die Abhängigkeit der Temperaturerhöhungen vom Wasserstoffperoxidgehalt der Lösungen. Die Temperaturerhöhungen sind direkt proportional den Wasserstoffperoxidkonzentrationen, gehen aber nicht durch den Nullpunkt, da die Lösungswärme neben der Reaktionswärme in die Wärmebilanz eingeht.

Mit den so gewonnenen Werten lässt sich ein Rechner programmieren, so dass dem Reaktionsmedium stets die erforderliche Menge Wasserstoffperoxid neu zugesetzt werden kann. Will man nur die Wasserstoffperoxidkonzentration in einem Punkt konstanthalten, so dient der in diesem Punkt geltende Wert der Temperaturerhöhung als Sollwert eines geeigneten Reglers.

2. Einer Schwefelsäurelösung gemäss Beispiel 1 wird in einer Vorrichtung nach Abbildung II Schwefeldioxid in einem weiteren Teilstrom zugesetzt. Der der Messzelle zugeführte Teilstrom mit wasserstoffperoxidhaltiger Schwefelsäure betrug 10 l pro Stunde, der Teilstrom mit gelöstem Schwefeldioxid 1 l pro Stunde. Die Ergebnisse zeigen Tabelle II und Abbildung V. Da hier keine Lösungswärme entsteht, geht die Gerade durch den Nullpunkt.

3. Analog Beispiel 2 werden auch höhere Wasserstoffperoxidkonzentrationen bestimmt. Tabelle III und Abbildung VI zeigen die Ergebnisse. Auch bei höheren Wasserstoffperoxidkonzentrationen ist also die Temperaturerhöhung direkt proportional der Wasserstoffperoxidkonzentration.

### TABELLE I

| Wasserstoffperoxid c: $H_2O_2$ (mg/l) | Temperaturerhöhung $\Delta T$ (K) |
|---|---|
| 150 | 2,0 |
| 500 | 2,95 |
| 850 | 3,9 |
| 1300 | 5,1 |
| 1850 | 6,6 |
| 2300 | 7,8 |
| 3250 | 10,5 |
| 4000 | 12,5 |
| 4800 | 14,7 |
| 5750 | 17,3 |
| 7100 | 21,0 |

### TABELLE II

| Wasserstoffperoxid c: $H_2O_2$ (mg/l) | Temperaturerhöhung $\Delta T$ (K) |
|---|---|
| 55 | 0,15 |
| 75 | 0,20 |
| 100 | 0,27 |
| 120 | 0,32 |

### TABELLE II (Fortsetzung)

| Wasserstoffperoxid c: $H_2O_2$ (mg/l) | Temperaturerhöhung $\Delta T$ (K) |
|---|---|
| 150 | 0,39 |
| 180 | 0,50 |
| 230 | 0,65 |
| 295 | 0,80 |
| 340 | 0,90 |
| 385 | 1,02 |
| 395 | 1,05 |
| 450 | 1,23 |
| 515 | 1,38 |
| 560 | 1,47 |
| 620 | 1,65 |
| 660 | 1,71 |
| 705 | 1,83 |
| 750 | 1,96 |
| 780 | 2,04 |
| 810 | 2,12 |
| 845 | 2,24 |
| 875 | 2,32 |
| 920 | 2,40 |
| 967 | 2,53 |
| 1005 | 2,63 |

### TABELLE III

| Wasserstoffperoxid c: $H_2O_2$ (mg/l) | Temperaturerhöhung $\Delta T$ (K) |
|---|---|
| 1680 | 3,2 |
| 2500 | 4,8 |
| 3320 | 6,4 |
| 4120 | 8,0 |
| 5200 | 10,0 |
| 5960 | 11,4 |
| 6900 | 13,2 |
| 7500 | 14,6 |
| 8040 | 15,6 |
| 8600 | 16,6 |
| 9100 | 18,0 |
| 9480 | 18,6 |
| 9900 | 19,6 |
| 10240 | 20,4 |
| 11100 | 21,8 |
| 11700 | 22,8 |

**Patentansprüche**

1. Verfahren zur Bestimmung und Überwachung von Wasserstoffperoxidkonzentrationen in flüssigen Reaktionsmedien durch Umsetzung des Wasserstoffperoxids in einem Teilstrom des Reaktionsmediums mit einem Stoff, der mit Wasserstoffperoxid vollständig abreagiert, und Messung der damit verbundenen physikalischen und/oder chemischen Effekte, dadurch gekennzeichnet, dass als reagierender Stoff ein Stoff verwendet wird, der sich mit Wasserstoffperoxid in einer exothermen Reaktion umsetzt, dass der Teilstrom des Reaktionsmediums und ein Strom des reagierenden Stoffes in einer thermisch isolierten Meszelle zusammengebracht werden, und dass der aus der Reaktionswärme herrührende Temperaturanstieg des Gemisches gemessen wird, wobei der reagierende Stoff im Überschuss gegenüber dem Wasserstoffperoxid vorliegen muss.

2. Verfahren nach Anspruch 1, dadurch gekennzeichnet, dass das Äquivalenzverhältnis von Wasserstoffperoxid zu reagierendem Stoff bei 1:1,3 bis 1,8 liegt.

3. Verfahren nach Anspruch 1 oder 2, dadurch gekennzeichnet, dass der Teilstrom des Reaktionsmediums und der Strom des reagierenden Stoffes in einem vorgegebenen Mengenverhältnis konstant gehalten werden und beide Ströme etwa gleiche Temperatur aufweisen.

4. Verfahren nach einem der Ansprüche 1 bis 3, dadurch gekennzeichnet, dass als reagierender Stoff Schwefeldioxid verwendet wird.

5. Verfahren nach einem der Ansprüche 1 bis 4, dadurch gekennzeichnet, dass das Schwefeldioxid einem weiteren Teilstrom des Reaktionsmediums zugesetzt und dieser Teilstrom nach Abreaktion des darin enthaltenen Wasserstoffperoxids als gesättigte Schwefeldioxidlösung der Messzelle zugeführt wird.

6. Vorrichtung zur Durchführung der verfahren zur Bestimmung und Überwachung von Wasserstoffperoxidkonzentrationen in flüssigen Reaktionsmedien nach einem der Ansprüche 1 bis 5, bestehend aus einem Behälter, der das Reaktionsmedium enthält, Leitungen, Dosiereinrichtungen, Fördermitteln und einer Messzelle, dadurch gekennzeichnet, dass die Messzelle (2) mit einer thermischen Isolation (3) versehen ist, an einem Ende getrennt einen Zulauf (4) für eine Teilstromleitung des Reaktionsmedium und einen Zulauf (6) für den reagierenden Stoff aufweist, am anderen Ende einen Ablauf (7) besitzt und an einem Zulauf (4) oder beiden Zuläufen (4, 6) und am Ablauf (7) Temperaturfühler (8, 9) zur Messung der Eingangs- und Ausgangstemperatur der Flüssigkeiten angebracht sind.

7. Vorrichtung nach Anspruch 6, dadurch gekennzeichnet, dass zwischen dem Behälter (1) für das Reaktionsmedium und der Messzelle (2) eine weitere Teilstromleitung (10) angeordnet ist, in die ein Sättiger (11) für eine Schwefeldioxidzugabe eingebracht ist.

8. Vorrichtung nach Anspruch 6 oder 7, dadurch gekennzeichnet, dass die Teilstromleitung (5) für das Reaktionsmedium und die Teilstromleitung (10) für den reagierenden Stoff vor der Messzelle (2) als Doppelleitung (12) ausgebildet sind.

## Claims

1. A process for determining and monitoring hydrogen peroxide concentrations in liquid reaction media by reaction of the hydrogen peroxide in a component stream of the reaction medium with a substance which reacts off completely with hydrogen peroxide and measuring the associated physical and/or chemical effects, characterized in that a substance which reacts with hydrogen peroxide in an exothermic reaction is used as the reacting substance, in that the component stream of reaction medium and a stream of the reacting substance are combined in a heat-insulated measuring cell and in that the increase in the temperature of the mixture arising out of the heat of reaction is measured, the reacting substance having to be present in excess in relation to the hydrogen peroxide.

2. A process as claimed in claim 1, characterized in that the equivalence ratio of hydrogen peroxide to reacting substance is 1:1.3 to 1.8.

3. A process as claimed in claim 1 or 2, characterized in that the component stream of reaction medium and the stream of reacting substance are kept constant in a predetermined quantitative ratio and in that both streams have substantially the same temperature.

4. A process as claimed in any of claims 1 to 3, characterized in that sulfur dioxide is used as the reacting substance.

5. A process as claimed in any of claims 1 to 4, characterized in that the sulfur dioxide is added to another component stream of the reaction medium and in that this component stream is delivered to the measuring cell as a saturated sulfur dioxide solution after the hydrogen peroxide therein has reacted off.

6. An apparatus for carrying out the process for determining and monitoring hydrogen peroxide concentrations in liquid reaction media claimed in any of claims 1 to 5, consisting of a container accomodating the reaction medium, pipes, metering units, transporting means and a measuring cell, characterized in that the measuring cell (2) is provided with a heat insulation (3), comprises at one end an inlet (4) for a component stream pipe of the reaction medium and a separate inlet (6) for the reacting substance and, at its other end, comprises an outlet (7) and temperature sensors (8, 9) for measuring the entry and exit temperature of the liquids are provided at one inlet (4) or at both inlets (4, 6) and at the outlet (7).

7. An apparatus as claimed in claim 6, characterized in that another component stream pipe (10), into which a saturator (11) for the addition of sulfur dioxide is introduced, is arranged between the container (1) for the reaction medium and the measuring cell (2).

8. An apparatus as claimed in claim 6 or 7, characterized in that the component stream pipe (5) for the reaction medium and the component stream pipe (10) for the reacting substance are formed by a double pipe (12) before the measuring cell (2).

## Revendications

1. Procédé pour la détermination et la surveillance des concentrations en eau oxygénée dans des milieux réactionnels liquides par réaction de l'eau oxygénée d'un courant partiel avec une substance qui réagit totalement avec l'eau oxygénée et mesure des effets physiques et/ou chimiques qui résultent de cette opération, procédé caractérisé en ce que, comme substance réagissante, on utilise une substance qui réagit avec l'eau oxygénée en une réaction exothermique, que le courant partiel du milieu réactionnel et un courant de la substance réagissante sont rassemblés dans une cellule de mesure isolée de la chaleur et que l'on mesure l'augmentation de la température du mélange résultant de la chaleur de réaction, la substance réagissante devant être présente en excès par rapport à l'eau oxygénée.

2. Procédé suivant la revendication 1, caractérisé en ce que le rapport d'équivalence entre l'eau oxygénée et la substance réagissante se situe entre 1:1,3 et 1:1,8.

3. Procédé suivant les revendications 1 ou 2, caractérisé en ce que le courant partiel de milieu réactionnel et le courant de substance réagissante sont maintenus dans un rapport constant prescrit, et que les deux courants présentent des températures à peu près égales.

4. Procédé suivant l'une des revendications 1 à 3, caractérisé en ce que, comme substance réagissante, on utilise l'anhydride sulfureux.

5. Procédé suivant l'une des revendications 1 à 4, caractérisé en ce que l'anhydride sulfureux est ajouté à une autre courant partiel du milieu réactionnel et que ce courant partiel est envoyé, après réaction de l'eau oxygénée qui y est contenue sous la forme de solution saturée d'anhydride sulfureux à la cellule de mesure.

6. Installation pour l'exécution du procédé de détermination et de surveillance des concentrations en eau oxygénée dans un milieu réactionnel liquide suivant l'une des revendications 1 à 5, constitué d'un récipient qui contient le milieu réactionnel, de conduites, de dispositifs doseurs, d'agents transporteurs, et d'une cellule de mesure, caractérisée en ce que, la cellule de mesure (2) est pourvue d'une isolation thermique (3), présente à une extrémité, séparément, une arrivée /4) d'une conduite pour un courant partiel de milieu réactionnel et une arrivée (6) de la substance qui doit réagir, et possède à l'autre extrémité, une évacuation (7), et sur une arrivée (4) ou sur les deux arrivées (4, 6) et sur l'évacuation (7), sont montés des détecteurs de température (8, 9) pour mesurer les températures d'entrée et de sortie des liquides.

7. Installation suivant la revendication 6, caractérisée en ce qu'entre le récipient (1) du milieu réactionnel et la cellule de mesures (2), il est disposé une autre conduite (10) de courant partiel sur laquelle il est monté un saturateur (11) pour une addition d'anhydride sulfureux.

8. Installation suivant l'une des revendications 6 ou 7, caractérisée en ce que la conduite (5) de courant partiel du milieu réactionnel et la conduite (10) de courant partiel de la substance réagissante sont réalisées sous la forme d'une conduite double (12) avant la cellule de mesures (2).

Fig. I

Fig.II

Fig. III

**Temperaturerhöhung**

$\Delta T$ [K]

$H_2O_2$ enthaltender Flüssigkeitsstrom 2,5 l/h

Volumenstrom gasförmiges $SO_2$ 12 l/h

$t_L$ = 1,6 K

Fig. IV

C [mg $H_2O_2$ /l]

13

Temperaturerhöhung

$\Delta T\,[\,K\,]$

$H_2O_2$ enthaltender Flüssigkeitsstrom  10 l/h

$SO_2$  enthaltender Flüssigkeitsstrom   1 l/h

Fig. V

$C\,[mg\,H_2O_2\,/\,l\,]$

0 178 507

Fig. VI